# EUROPÄISCHE PATENTSCHRIFT

(11) **EP 4 726 428 B1**
(45) Veröffentlichungstag und Bekanntmachung des Hinweises auf die Patenterteilung: **02.12.2026**
(21) Anmeldenummer: 24205378.3
(22) Anmeldetag: 08.10.2024
(51) Int. Cl.: G01S 7/481, B66C 13/46, G01S 7/497, G01S 17/42, G01S 17/87, G01S 17/93, G01S 7/48, G01S 17/89

(54) **SENSORVORRICHTUNG UND SYSTEM ZUR ERFASSUNG EINES FAHRBEREICHS EINES INDUSTRIEROBOTERS**
SENSOR DEVICE AND SYSTEM FOR DETECTING A DRIVING AREA OF AN INDUSTRIAL ROBOT
DISPOSITIF DE CAPTEUR ET SYSTÈME DE DÉTECTION D'UNE ZONE DE CONDUITE D'UN ROBOT INDUSTRIEL

(43) Veröffentlichungstag der Anmeldung: 15.04.2026
(73) Patentinhaber: SICK AG, 79183 Waldkirch (DE)
(72) Erfinder: Pischke, Tiberius, 79100 Freiburg (DE); Klein, Ralf, 79423 Heitersheim (DE); Bergemann, Albrecht, 22083 Hamburg (DE)
(74) Vertreter: Manitz Finsterwald Patent- und Rechtsanwaltspartnerschaft mbB

(56) Entgegenhaltungen:
- EP-A2- 2 863 176
- DE-A1- 102008 019 373
- DE-A1- 102017 112 661
- DE-A1- 102018 110 549
- DE-U1- 202005 004 466
- DE-U1- 202011 000 365
- DE-U1- 202018 100 458
- NEUVITION ET AL: "LiDAR-based Crane Anti-collision System - Neuvition | solid-state lidar,lidar sensor suppliers, lidar technology, lidar sensor", 5 November 2021 (2021-11-05), pages 1 - 4, XP093249024, Retrieved from the Internet <URL:https://web.archive.org/web/20230530010518/https://www.neuvition.com/media/neuvition-lidar-based-crane-anti-collision-system.html> [retrieved on 20250211]

## Beschreibung

Die Erfindung betrifft eine Sensorvorrichtung, ein System und eine Verwendung des Systems zur Erfassung des Fahrbereichs eines Industrieroboters, insbesondere eines Krans zum Bewegen von Containern.

Die Vermeidung von Sach- und/oder Personenschäden kann die Absicherung des Fahrbereichs eines Industrieroboters erfordern. Unter einem Industrieroboter kann auch ein Industriefahrzeug zu verstehen sein. Der Industrieroboter kann manuell gesteuert werden, sich teilautomatisiert bewegen und/oder sich voll-automatisiert bewegen. Mit einem Industrieroboter kann ein Kran gemeint sein, insbesondere ein schienengebundener (Portal-)Kran zum Bewegen von Containern. Mit einem Industrieroboter kann auch eine Baumaschine oder Baufahrzeug, eine Landwirtschaftsmaschine oder ein Landwirtschaftsfahrzeug, eine Forstwirtschaftsmaschine oder ein Forstwirtschaftsfahrzeug, eine Bergbaumaschine oder Bergbaufahrzeug, eine Erdarbeitsmaschine oder ein Erdarbeitsfahrzeug, oder eine Reinigungsmaschine oder ein Reinigungsfahrzeug gemeint sein.

Eine Absicherung des Fahrbereichs eines solchen Industrieroboters wird oft mittels trennenden Schutzeinrichtungen, beispielsweise Zäunen, realisiert. Eine solche Vorgehensweise kann jedoch mit hohen Investitions- sowie Service- und Wartungskosten verbunden sein. Dies kann insbesondere auf schienengeführte (Portal-)Kräne zutreffen, deren Fahrbereich sich typischerweise auf Schienen mit einer Länge von bis zu 2 km erstrecken kann.

Eine räumliche (dreidimensionale) sichere Umgebungserfassung mittels Sensoren im Sinne von BWS (berührungsloswirkende Schutzeinrichtungen) hat das Potential, trennende Schutzeinrichtungen (z.B. Zäune) obsolet machen zu können. Dafür bedarf es jedoch einer Sensor-Technologie, welche sowohl die systematischen Eigenschaften als auch die Detektionsfähigkeit zur sicheren Erkennung einer Person oder eines Objekts im Fahrbereich eines Industrieroboters unter möglichst vielen verschiedenen Umgebungsbedingungen sicherstellt und/oder einen sicheren Zustand des Industrieroboters herstellt. Dabei können die hierin verwendeten Begriffe sicher oder Sicherheit im Sinne von bestimmten sicherheitsspezifischen Normen verstanden werden, wie beispielsweise ISO 13849 oder IEC 62998. Für sicherheitsgerichtete Anwendungen sollen oder müssen Fehler bis zu einem bestimmten Sicherheitsniveau oder -level und beispielsweise mit einem sogenannten "Performance Level" (PL) nach ISO 13849 beherrschbar sein. Auch sollen oder müssen Zertifizierungsstandards einer bestimmten "Performance Class" (PC) nach IEC 62998 durch die Sensor-Technologie erfüllt werden können. Weitere relevante und teilweise sicherheitsspezifischen Normen wären ISO 12100, ISO 18497, ISO 25119, ISO 17757, ISO 21815, ISO 19014, ISO 13482, IEC 63327, IEC 60721, ISO 3691-4.

DE 10 2017 112661 A1 beschreibt ein Portalhubgerät für Container mit einem Sensorsystem.

DE 10 2018 110549 A1 beschreibt eine Laserscanvorrichtung für ein Kraftfahrzeug.

DE 10 2008 019373 A1 beschreibt eine Messvorrichtung für einen Kran.

Der Artikel Neuvition, "LiDAR-based Crane Anti-collision System", https://www.neuvition.com/media/neuvition-lidar-based-crane-anti-collision-system.html, 5. November 2021, beschreibt ein LiDAR-basiertes Kran-Anti-Kollisionssystem.

DE 20 2005 004466 U1 beschreibt eine Vorrichtung für ein führerloses Transportfahrzeug zur optoelektronischen Erfassung von Objekten und/oder Personen.

DE 20 2011 000365 U1 beschreibt ein führerloses Transportsystem.

EP 2 863 176 A2 beschreibt Abtasteinheiten mit mehreren Erfassungseinheiten.

DE 20 2018 100458 U1 beschreibt einen optoelektronischen Sensor.

Der Erfindung liegt die Aufgabe zugrunde, eine sichere und effiziente Absicherung des Fahrbereichs eines Industrieroboters bereitzustellen.

Zur Lösung der Aufgabe ist eine Sensorvorrichtung mit den Merkmalen des Anspruchs 1 vorgesehen.

Die erfindungsgemäße Sensorvorrichtung zur Erfassung des Fahrbereichs eines Industrieroboters, insbesondere eines (schienengebundenen) Krans zum Bewegen von Containern, umfasst zumindest einen ersten Umgebungssensor und einen zweiten Umgebungssensor, wobei der erste Umgebungssensor und der zweite Umgebungssensor jeweils einen Mehrstrahllaserscanner umfassen, wobei der erste Umgebungssensor für eine Umgebungserfassung in mehreren ersten Lagen, die als die Umgebung abtastende Scanlagen umgesetzt sind, Sendelicht aussendet, und wobei der zweite Umgebungssensor für eine Umgebungserfassung in mehreren zweiten Lagen, die ebenfalls als die Umgebung abtastende Scanlagen umgesetzt sind, Sendelicht aussendet, wobei die Umgebungssensoren so angeordnet sind, dass die ersten Lagen des Sendelichts des ersten Umgebungssensors mit den zweiten Lagen des Sendelichts des zweiten Umgebungssensors in einem Überlappungsbereich der Sichtfelder der Umgebungssensoren zusammenfallen, wobei in dem Überlappungsbereich der Sichtfelder zumindest eine der ersten Lagen mit einer der zweiten Lagen vollständig überlappt, oder dass sich die ersten Lagen des Sendelichts des ersten Umgebungssensors mit den zweiten Lagen des Sendelichts des zweiten Umgebungssensors in dem Überlappungsbereich der Sichtfelder der Umgebungssensoren abwechseln, wobei in dem Überlappungsbereich der Sichtfelder zumindest eine Lage der ersten Lagen zwischen zwei direkt, mit Ausnahme der einen Lage der ersten Lagen, nebeneinanderliegenden Lagen der zweiten Lagen angeordnet ist.

Die erfindungsgemäße Sensorvorrichtung ist vorzugsweise an dem Industrieroboter montierbar, und insbesondere an einem Kranbein eines Krans montierbar.

Mit einem Umgebungssensor kann ein Laserscanner, und insbesondere ein Mehrstrahllaserscanner, oder ein LiDAR-(Light Detection And Ranging)Sensor gemeint sein. Die Umgebungssensoren können (mittels einem Lichtsender) Sendelicht in mehreren Lagen aussenden, um eine Umgebung zu erfassen und insbesondere abzutasten. Es versteht sich, dass die Umgebungssensoren an Objekten in der Umgebung diffus reflektiertes oder allgemein remittiertes Sendelicht (mittels einem Lichtempfänger) als Empfangslicht empfangen können und vorzugsweise anhand des Empfangslichts die Abstände der Objekte (relativ zu dem jeweiligen Umgebungssensor) beispielsweise mit einem Laufzeitverfahren messen können. Dabei kann in den Umgebungssensoren ein sogenanntes Warn- oder Schutzfeld konfiguriert sein, bei dessen Verletzung beispielsweise ein Warnsignal ausgegeben und/oder ein Maschinenstopp des Industrieroboters veranlasst werden kann.

Der Erfindung liegt mit anderen Worten die Erkenntnis zugrunde, dass die Sicherheit der Erfassung des Fahrbereichs des Industrieroboters erhöht werden kann, wenn die Umgebungssensoren in einer der zwei unterschiedlichen Weisen angeordnet sind. Dadurch kann letztlich eine sichere und effiziente Absicherung des Fahrbereichs des Industrieroboters erreicht werden. Die zwei verschiedenen Möglichkeiten der Anordnung der Sensoren können für unterschiedliche Anwendungssituationen jeweils bestimmte Vorteile bieten.

Zum einen können die Sensoren so angeordnet werden, dass die ersten Lagen des Sendelichts des ersten Umgebungssensors mit den zweiten Lagen des Sendelichts des zweiten Umgebungssensors dem Überlappungsbereich der Sichtfelder der Umgebungssensoren zusammenfallen und dabei vorzugsweise zumindest einen Teil des Fahrbereichs redundant erfassen. Dies bedeutet, dass in dem Überlappungsbereich der Sichtfelder zumindest eine der ersten Lagen mit einer der zweiten Lagen vollständig überlappt und/oder deckungsgleich ist, wobei vorzugsweise in dem Überlappungsbereich der Sichtfelder jede der ersten Lagen mit jeweils einer der zweiten Lage deckungsgleich ist. Dadurch werden in den sich überlappenden Lagen mehr Bildpunkte pro Längeneinheit oder pro Fläche aufgenommen, bevorzugt doppelt so viele. Diese redundante Erfassung bzw. Abtastung kann eine sichere Erfassung (und Überwachung) des Fahrbereichs des Industrieroboters gewährleisten. Wenn beispielsweise ein Umgebungssensor versagt, kann die Erfassung eines Objekts oder einer Person im Fahrbereich immer noch durch den anderen Umgebungssensor erfolgen. **In** anderen Worten kann durch die Redundanz die Ausfallwahrscheinlichkeit verringert und die Sicherheit der Erfassung erhöht werden.

Andererseits können die Umgebungssensoren so angeordnet sein, dass sich in dem Überlappungsbereich der Sichtfelder der Umgebungssensoren die ersten Lagen des Sendelichts des ersten Umgebungssensors mit den zweiten Lagen des Sendelichts des zweiten Umgebungssensors abwechseln. Dies bedeutet, dass in dem Überlappungsbereich der Sichtfelder zumindest eine Lage der ersten Lagen zwischen zwei direkt (mit Ausnahme der einen Lage der ersten Lagen) nebeneinanderliegenden Lagen der zweiten Lagen angeordnet ist. **In** anderen Worten können die ersten und die zweiten Lagen in dem Überlappungsbereich der Sichtfelder zueinander abwechselnd bzw. aufgefächert angeordnet sein. Vorzugsweise ist jede der ersten Lagen in dem Überlappungsbereich der Sichtfelder jeweils zwischen zwei direkt (mit Ausnahme der jeweiligen Lage der ersten Lagen) nebeneinanderliegenden Lagen der zweiten Lagen angeordnet.

Es versteht sich, dass die Sensorvorrichtung auch mehr als zwei Umgebungssensoren aufweisen kann, beispielsweise drei, vier, fünf oder sechs Umgebungssensoren. Die weiteren Umgebungssensoren können ebenfalls Sendelicht in mehreren Lagen aussenden, wobei in dem Überlappungsbereich sich die Lagen von Sendelicht aller oder mehrerer Umgebungssensoren abwechseln und/oder überlappen können. Beispielsweise kann ein Abwechseln derart gestaltet sein, dass zwischen zwei direkt nebeneinander angeordneten Lagen von Sendelicht eines Umgebungssensors zumindest eine Lage von Sendelicht eines anderen Umgebungssensors angeordnet ist. Auch ist es möglich, dass die Lagen eines Teils der Umgebungssensoren abwechselnd angeordnet sind, wobei die Lagen eines anderen Teils der Umgebungssensoren mit den sich abwechselnden Lagen zumindest zum Teil zusammenfallen. Damit können die Vorteile der abwechselnden und zusammenfallenden Lagen auch gleichzeitig erzielt werden.

In der abwechselnden oder aufgefächerten Anordnung kann die effektive Auflösung und/oder Anzahl von Bildpunkten der (zusammengenommenen) Umgebungssensoren erhöht werden. Typische Umgebungssensoren können beispielsweise dazu ausgebildet sein, Sendelicht in 16 Lagen auszusenden. In einer Entfernung von mehreren Metern (z.B. mehr als 20 m) von dem Umgebungssensoren aus gesehen können jedoch Zwischenräume zwischen den Lagen entstehen, wobei die Zwischenräume eine Ausdehnung von mehr als 2 m erreichen können. Eine Person oder ein Objekt, die beziehungsweise das sich genau in einem solchen (nicht erfassten) Zwischenraum befindet oder hineinbewegt, kann daher in diesem Zwischenraum regelrecht "verschwinden" und womöglich übersehen werden. Durch die abwechselnde Anordnung können diese Zwischenräume zwischen den Lagen eines Umgebungssensors durch die Lagen des anderen Umgebungssensors erfasst werden. In anderen Worten kann in dem Überlappungsbereich der Sichtfelder der Umgebungssensoren zumindest einen Teil des Fahrbereichs bevorzugt in einer höheren Dichte erfasst werden, es wird also ein höherer Prozentsatz des Überlappungsbereichs abgetastet. Dadurch kann sich also eine "fusionierte" Auflösung ergeben, wobei die fusionierte Auflösung (also die Anzahl der aufgenommenen Bildpunkte) höher ist als die Auflösung der Umgebungssensoren jeweils für sich alleine genommen. Auf diese Weise kann ein bestimmtes PL, beispielsweise PL r, erreicht werden, auch wenn beide oder einer der Umgebungssensoren jeweils für sich alleine gesehen möglicherweise nicht als Sicherheitssensor nach PL r ausgebildet ist. Ferner können durch die versetzte Positionierung der Umgebungssensoren und in der Folge, die Abtastung der Umgebung aus zwei (leicht) verschiedenen Richtungen, Bildstörungen oder störende Umspiegelungen, die beispielsweise an sehr stark (insbesondere diffus) reflektierenden Objekten (z.B. spiegelnde Flächen oder Reflektoren) im Sichtfeld der Umgebungssensoren entstehen können, besser ausgeglichen werden. Auf diese Weise kann insgesamt die Sicherheit der Erfassung (und Überwachung) des Fahrbereichs des Industrieroboters erhöht werden.

Die Sensorvorrichtung kann für sicherheitsgerichtete Anwendungen geeignet sein und verzugsweise ein PL r (nach ISO 13849) erreichen.

Es versteht sich, dass mit dem Überlappungsbereich ein dreidimensionales Volumen gemeint sein kann, in dem sich die (dreidimensionalen) Sichtfelder der Umgebungssensoren überlappen. Zudem versteht sich, dass die Umgebungssensoren im Wesentlichen in die gleiche Richtung zeigen können, sodass sich deren Sichtfelder zumindest teilweise überlappen.

Ferner umfasst die Sensorvorrichtung eine Halterung für die Umgebungssensoren, wobei die Halterung ausgebildet ist, die Umgebungssensoren zumindest in einer ersten Sensoranordnung oder einer von der ersten Sensoranordnung verschiedenen zweiten Sensoranordnung zu halten, wobei in der ersten Sensoranordnung die ersten Lagen des Sendelichts des ersten Umgebungssensors mit den zweiten Lagen des Sendelichts des zweiten Umgebungssensors in dem Überlappungsbereich der Sichtfelder der Umgebungssensoren zusammenfallen und in der zweiten Sensoranordnung sich die ersten Lagen des Sendelichts des ersten Umgebungssensors mit den zweiten Lagen des Sendelichts des zweiten Umgebungssensors in dem Überlappungsbereich der Sichtfelder der Umgebungssensoren abwechseln. Dabei ist die Halterung ausgebildet, die Umgebungssensoren zumindest zwischen der ersten Sensoranordnung und der zweiten Sensoranordnung veränderbar zu halten. Auf diese Weise kann zwischen der ersten und der zweiten Sensoranordnung flexibel umgeschaltet werden, um beispielsweise auf Veränderungen in der Umgebung flexibel reagieren zu können und/oder um die Vorteile der jeweiligen Sensoranordnung je nach Situation und Bedarf nutzen zu können.

Gemäß einer Ausführungsform umfasst erste Umgebungssensor und der zweite Umgebungssensor jeweils einen Laserscanner, insbesondere einen Mehrstrahllaserscanner. Mit den Lagen von Sendelicht können dementsprechend die Scanlagen gemeint sein, mit der der Laserscanner die Umgebung abtastet. Die Halterung kann eine Montageplatte, eine Feinjustierhalterung, einen Encoder, Befestigungsmittel, Schraubensicherungen, und/oder eine Mast-Halterung umfassen.

Die Halterung kann an dem Industrieroboter montierbar sein.

Gemäß einer Ausführungsform umfasst die Halterung zumindest eine Markierung, wobei die Markierung derart an der Halterung angeordnet ist, dass die Markierung von dem ersten Umgebungssensor und/oder von dem zweiten Umgebungssensor für Diagnosezwecke erfasst werden kann.

Zusätzlich oder alternativ kann die Sensorvorrichtung eine Markierung umfassen, die an dem Industrieroboter, insbesondere an einer vorbestimmten Position an dem Industrieroboter, anbringbar ist, wobei die Markierung derart an dem Industrieroboter angeordnet werden kann, dass die Markierung von dem ersten Umgebungssensor und/oder von dem zweiten Umgebungssensor für Diagnosezwecke erfasst werden kann.

Mit der Markierung kann eine visuelle Markierung gemeint sein, wobei die Markierung beispielsweise eine farbige Fläche und/oder ein Muster umfassen kann.

Die Markierung kann von dem ersten Umgebungssensor und/oder von dem zweiten Umgebungssensor, und vorzugsweise von beiden Umgebungssensoren, für Diagnosezwecke erfasst werden. In anderen Worten können die Umgebungssensoren, beispielsweise immer bevor der Industrieroboter anfährt, auf Anfrage und/oder in regelmäßigen Zeitabständen, Sensordaten über die Markierung aufnehmen und anhand der erfassten Sensordaten über die Markierung eine Diagnose bzw. Daten-Plausibilisierung durchführen. Da die Markierung direkt an der Halterung selbst angebracht ist, kann die Kalibrierung bzw. das Trainieren der Erkennung der Markierung in den Sensordaten bereits (ab Werk) vorgenommen werden, bevor die Sensorvorrichtung an dem Industrieroboter montiert wird. Ferner kann, wenn z.B. aus der Diagnose ersichtlich wird, dass die Ausrichtung der Umgebungssensoren für ein bestimmtes PL (Performance Level) noch nicht optimal ist, die Halterung (ab Werk und/oder vor Montage an dem Industrieroboter) einfacher und/oder kostengünstiger nachjustiert werden. Auch kann insgesamt das PL der Sensorvorrichtung erhöht und/oder ein bestimmtes PL der Sensorvorrichtung erreicht werden.

Gemäß einer Ausführungsform umfasst die Sensorvorrichtung eine Verarbeitungsvorrichtung, die dazu ausgebildet ist, anhand von dem ersten Umgebungssensor und/oder von dem zweiten Umgebungssensor empfangenen Empfangslichts Sensordaten über die Umgebung, insbesondere über zumindest einen Teil des Fahrbereichs des Industrieroboters, zu gewinnen, insbesondere mit einem Laufzeitverfahren zu messen.

Gemäß einer Ausführungsform ist die Verarbeitungsvorrichtung dazu ausgebildet, anhand der Sensordaten einen Gefahrenzustand festzustellen, d.h. festzustellen, dass sich eine Person und/oder ein Objekt im Fahrbereich befindet, und auf die Feststellung des Gefahrenzustands hin ein (Warn-)Signal auszugeben und/oder den Industrieroboter in einen abgesicherten Steuerungsmodus zu versetzen.

Zu diesem Zweck kann die Sensorvorrichtung mit dem Industrieroboter in kabelgebundener oder kabelloser Signalverbindung stehen. Der abgesicherten Steuerungsmodus kann einen Maschinen-Stopp, eine Verlangsamung der Bewegung und/oder eine Richtungs- bzw. Routenänderung der Bewegung des Industrieroboters umfassen.

Gemäß einer Ausführungsform ist die Verarbeitungsvorrichtung dazu ausgebildet, anhand des von dem ersten Umgebungssensor empfangenen Empfangslichts erste Sensordaten zu gewinnen und anhand des von dem zweiten Umgebungssensor empfangenen Empfangslichts zweite Sensordaten zu gewinnen, anhand der ersten Sensordaten und der zweiten Sensordaten eine erste Position der Markierung beziehungsweise eine zweite Position der Markierung mittels Laufzeitverfahren und/oder optischer Verzerrung der Markierung zu bestimmen und anhand beider Sensordaten eine dritte Position der Markierung mittels Lateration und/oder Triangulation zu bestimmen, und einen Fehlerzustand der Umgebungssensoren daran festzustellen, dass bei einem Abgleich der bestimmten ersten, zweiten und/oder dritten Position der Markierung miteinander und/oder bei einem Abgleich der bestimmten ersten, zweiten und/oder dritten Position der Markierung mit einer vorbestimmten Position der Markierung eine Abweichung feststellbar ist, und/oder dass im Zeitverlauf eine Veränderung der ersten, zweiten und/oder dritten Position der Markierung feststellbar ist.

Es versteht sich, dass in diesem Fall die Markierung an der Halterung vorzugsweise von beiden Umgebungssensoren erfasst werden kann. Mit einer Position der Markierung kann eine Position der Markierung relativ zu dem ersten und/oder zweiten Umgebungssensor gemeint sein.

Die Verarbeitungsvorrichtung kann beispielsweise eine Recheneinheit (d.h. einen Prozessor) und ein Speichermedium umfassen. Die Verarbeitungsvorrichtung kann eine separate Verarbeitungsvorrichtung sein, die mit den Umgebungssensoren in kabelloser oder kabelgebundener Signalverbindung steht. Die Sensorvorrichtung kann auch durch die Umgebungssensoren selbst bereitgestellt sein. Beispielsweise können die hierin beschriebenen Funktionen der Sensorvorrichtung auch durch die Umgebungssensoren selbst, teilweise oder vollständig, bereitgestellt sein. Eine Position der Markierung, insbesondere die erste und/oder zweite Position, kann optional durch die Verarbeitungsvorrichtung anhand der jeweiligen Sensordaten berechnet werden oder kann auch bereits durch den jeweiligen Umgebungssensor selbst berechnet werden, so dass nur noch die berechnete Position an die Verarbeitungsvorrichtung übermittelt wird.

Die Markierung kann beispielsweise ein bestimmtes Muster umfassen, wobei die Position der Markierung relativ zu dem ersten und/oder zweiten Umgebungssensor dann mittels optischer Verzerrung des Musters bestimmt werden kann. Alternativ oder zusätzlich kann die erste und zweite Position der Markierung jeweils mittels Laufzeitverfahren gemessen werden.

Durch Lateration und/oder Triangulation anhand beider Sensordaten kann eine dritte Position der Markierung bestimmt werden. Beispielsweise kann anhand der ersten Sensordaten ein erster Abstand der Position der Markierung relativ zu dem ersten Umgebungssensor und ein zweiter Abstand der Position der Markierung relativ zu dem zweiten Umgebungssensor bestimmt werden. Die dritte Position der Markierung kann dann dem Punkt, Bereich oder Volumen entsprechen, an dem sich ein erster Bereich (bzw. Volumen) festgelegt durch den ersten Abstand als Radius und ein zweiter Bereich (bzw. Volumen) festgelegt durch den zweiten Abstand als Radius überschneiden. Alternativ oder zusätzlich kann anhand der ersten Sensordaten eine erste Richtung der Position der Markierung ausgehend von dem ersten Umgebungssensor und eine zweite Richtung der Position der Markierung ausgehend von dem zweiten Umgebungssensor bestimmt werden. Die dritte Position der Markierung kann dann dem Punkt, Bereich oder Volumen entsprechen, an dem sich die erste und die zweite Richtung überschneiden. Mit einer Richtung kann ein Winkelbereich gemeint sein, der durch einen Azimut- und/oder Höhenwinkel bestimmt wird.

Es versteht sich, dass für die Bestimmung der dritten Position der Markierung auch die bestimmte erste und/oder zweite Position der Markierung herangezogen werden kann und umgekehrt. Auf diese Weise kann die Genauigkeit der Positionsbestimmung der Markierung bzw. die Robustheit der Diagnose verbessert werden.

Die Position und/oder Ausrichtung der Umgebungssensoren relativ zu einander kann, z.B. durch Kalibration ab Werk, bekannt sein. Zudem kann eine Position der Markierung relativ zu dem ersten und/oder zweiten Umgebungssensor, beispielsweise durch eine Kalibration ab Werk, vorbestimmt bzw. bekannt sein. Alternativ oder zusätzlich kann die Markierung beispielsweise an einer bekannten Position am Industrieroboter anbringbar sein oder angebracht sein, wobei eine Kalibrierung dann vor der Erstinbetriebnahme stattfinden und vor Ort, d.h. an dem Ort der bestimmungsgemäßen Verwendung, durchgeführt werden kann. Auf diese Weise können durch Umrechnung die bestimmte erste, zweite und/oder dritte Position der Markierung miteinander verglichen werden und/oder die bestimmte erste, zweite und/oder dritte Position der Markierung mit der vorbestimmten Position verglichen werden, um den Fehlerzustand festzustellen. Es versteht sich, dass die Verarbeitungsvorrichtung dazu ausgebildet sein kann, auf die Feststellung des Fehlerzustands hin ein (Warn-)Signal auszugeben. Das Signal kann beispielsweise angeben, dass eine Wartung der Sensorvorrichtung nötig ist. Auf diese Weise kann insgesamt die Sicherheit der Erfassung des Fahrbereichs erhöht bzw. der Absicherung des Fahrbereichs erhöht werden.

Gemäß einer Ausführungsform sind die Umgebungssensoren nebeneinander oder übereinander angeordnet sind.

Gemäß einer Ausführungsform sind die Umgebungssensoren in einem bestimmten Abstand zueinander angeordnet. Vorzugsweise liegt der Abstand zwischen 0 m bis 2 m, bevorzugt 0 m bis 1 m, bevorzugt 0 m bis 0,5 m, und noch weiter bevorzugt 0,25 m bis 0,5 m. Vorzugsweise sind die Umgebungssensoren direkt aneinander anschließend angeordnet. Alternativ können die Umgebungssensoren in einem Abstand von bis zu 30 cm zueinander angeordnet sein. Die Halterung, insbesondere die Größe der Halterung, ist dementsprechend ausgebildet, die Umgebungssensoren in dem bestimmten Abstand zu halten. Beispielsweise kann eine Breite und/oder Höhe der Halterung gleich oder kleiner als 2 m, bevorzugt gleich oder kleiner als 1 m und noch weiter bevorzugt gleich oder kleiner als 0,5 m Meter sein.

Gemäß einer Ausführungsform ist einer der Umgebungssensoren in Bezug zu dem anderen verkippt und/oder verdreht, insbesondere um 180° verdreht, angeordnet, sodass sich die ersten Lagen des Sendelichts des ersten Umgebungssensors mit den zweiten Lagen des Sendelichts des zweiten Umgebungssensors in dem Überlappungsbereich der Sichtfelder der Umgebungssensoren abwechseln. Es versteht sich, dass die Rotationsachse für die Verdrehung im Wesentlichen parallel zu der Fahrtrichtung des Industrieroboters sein kann, im Wesentlichen parallel zu der Ausrichtung des anderen (nicht verdrehten) Umgebungssensors sein kann, und/oder im Wesentlichen der Ausrichtung des verdrehten Umgebungssensors selbst entsprechen kann. In anderen Worten kann einer der Umgebungssensoren im Vergleich zu dem anderen "auf dem Kopf" stehen bzw. gestellt sein. Die Achse der Verkippung kann im Wesentlichen orthogonal zu der Fahrrichtung des Industrieroboters, im Wesentlichen orthogonal zu der Ausrichtung des anderen (nicht verkippten) Umgebungssensors, und/oder im Wesentlichen orthogonal zu der Ausrichtung des verkippten Umgebungssensors selbst sein. Die Achse der Verkippung kann auch im Wesentlichen parallel zum Boden (auf dem sich der Industrieroboter bewegt) sein bzw. im Wesentlichen horizontal zum Boden sein, sodass der verkippte Umgebungssensor zum Boden hin oder vom Boden weg nach oben geneigt ist.

Eine solche zweite Sensoranordnung kann insbesondere nützlich sein, wenn die Lagen, in denen die Umgebungssensoren Sendelicht aussenden, nicht gleich verteilt sind und/oder die gleiche Winkelausdehnung aufweisen. Beispielsweise können die Lagen des Sendelichts im Inneren des Sichtfelds eines Umgebungssensors enger beieinander liegen als in äußeren Bereichen des Sichtfelds des Umgebungssensors. Durch die Verdrehung und/oder Verkippung können diese Unregelmäßigkeiten (zumindest teilweise) ausgeglichen werden.

Zudem kann durch die Verkippung erreicht werden, dass die Umgebungssensoren insgesamt ein größeres vertikales Sichtfeld abdecken. **In** dem Überlappungsbereich der Sichtfelder kann durch die abwechselnde Anordnung der Lagen ein erhöhtes **PL** erreicht werden. Die übrigen Bereiche der Sichtfelder der Umgebungssensoren können durch jeweils einen der beiden Umgebungssensoren erfasst werden, wobei diese übrigen Bereiche jedoch (im Vergleich zu den Sichtfeldern der Umgebungssensoren in einer nicht verkippten Anordnung) weiter nach oben und/oder unten reichen können. Auf diese Weise können z.B. auch weiter oben liegende und/oder weiter unten liegenden Teile des Fahrbereichs und/oder auch Bereiche oberhalb und/oder unterhalb des Fahrbereichs erfasst werden. So kann beispielsweise ein oberhalb des Fahrbereichs eines Krans liegender, überstehender Container erfasst werden und auf die Erfassung des Containers hin ein Maschinenstopp des Krans ausgelöst werden.

Gemäß einer Ausführungsform ist der erste und/oder der zweite Umgebungssensor als Sicherheitssensor ausgebildet. Vorzugsweise sind beide Umgebungssensoren als Sicherheitssensoren ausgebildet. Auf diese Weise kann ein bestimmtes PL erreicht und/oder das PL der Sensorvorrichtung erhöht werden.

Gemäß einer Ausführungsform umfasst der erste und/oder der zweite Umgebungssensor jeweils ein Sichtfeld von gleich oder mehr als 180°, bevorzugt gleich oder mehr als 225°, bevorzugt gleich oder mehr als 270°, bevorzugt gleich oder mehr als 315° und bevorzugt gleich 360°. Auf diese Weise können größere Seitenbereiche des Fahrbereichs und/oder auch Bereiche außerhalb des Fahrbereichs (jeweils durch einen der beiden Umgebungssensoren) erfasst werden. Es versteht sich, dass die Halterung in diesem Fall so ausgebildet sein kann, dass die Sichtfelder der Umgebungssensoren möglichst wenig behindert werden. Die Umgebungssensoren können beispielsweise jeweils an einem Rand der Halterung angeordnet sein. Auch kann die Markierung auf der Halterung zwischen den Umgebungssensoren angeordnet sein.

Weiterer Gegenstand der Erfindung ist eine Verwendung einer hierin beschriebenen Sensorvorrichtung zur Erfassung des Fahrbereichs eines Industrieroboters, insbesondere eines Krans zum Bewegen von Containern.

Weiterer Gegenstand der Erfindung ist ein System zur Erfassung des Fahrbereichs eines Industrieroboters, insbesondere eines Krans zum Bewegen von Containern, umfassend den Industrieroboter, und zumindest eine hierin beschriebene Sensorvorrichtung, wobei die Sensorvorrichtung an dem Industrieroboter montiert ist.

Gemäß einer Ausführungsform umfasst das System zumindest eine Markierung, wobei die Markierung derart an der Halterung und/oder an dem Industrieroboter angeordnet ist, dass die Markierung von dem ersten Umgebungssensor und/oder von dem zweiten Umgebungssensor für Diagnosezwecke erfasst werden kann.

Gemäß einer Ausführungsform ist der Industrieroboter ein Kran, insbesondere ein schienengebundener (Portal-)Kran.

Gemäß einer Ausführungsform umfasst der Kran zumindest ein in Fahrtrichtung des Krans liegendes erstes Kranbein und zumindest ein entgegen der Fahrtrichtung des Krans liegendes zweites Kranbein, wobei an dem ersten und an dem zweiten Kranbein jeweils zumindest eine Sensorvorrichtung montiert ist, und insbesondere an einem Laufdrehgestell eines jeweiligen Kranbeins montiert ist, wobei vorzugsweise die Sensorvorrichtung an dem ersten Kranbein in Fahrtrichtung des Krans ausgerichtet ist und die Sensorvorrichtung an dem zweiten Kranbein entgegen der Fahrtrichtung des Krans ausgerichtet ist.

Gemäß einer Ausführungsform weisen die Sensorvorrichtungen die gleiche Sensoranordnung oder eine unterschiedliche Sensoranordnung auf. Beispielsweise können beide Sensorvorrichtungen entweder eine hierin beschriebene erste Sensoranordnung oder eine hierin beschriebene zweite Sensoranordnung der Umgebungssensoren aufweisen. Alternativ kann eine Sensorvorrichtung die erste Sensoranordnung der Umgebungssensoren und die andere Sensorvorrichtung die zweite Sensoranordnung der Umgebungssensoren aufweisen.

Gemäß einer Ausführungsform sind die Sensorvorrichtungen so ausgebildet, und insbesondere sind die Umgebungssensoren beider Sensorvorrichtungen so ausgebildet und werden so gehalten, dass die Umgebungssensoren auch einen Bereich zwischen den Kranbeinen (redundant oder abwechselnd) erfassen können.

Gemäß einer Ausführungsform sind die Sensorvorrichtungen auf gleicher Höhe an dem Industrieroboter, d.h. dem Kran, montiert.

Gemäß einer Ausführungsform umfasst der Kran zwei in Fahrtrichtung des Krans liegende erste Kranbeine und zwei entgegen der Fahrtrichtung des Krans liegende zweite Kranbeine, wobei an jedem der Kranbeine zumindest eine Sensorvorrichtung montiert ist, und insbesondere an einem Laufdrehgestell eines jeweiligen Kranbeins montiert ist, und wobei vorzugsweise die Sensorvorrichtungen an den ersten Kranbeinen in Fahrtrichtung des Krans ausgerichtet sind und die Sensorvorrichtungen an den zweiten Kranbeinen entgegen der Fahrtrichtung des Krans ausgerichtet sind.

Gemäß einer Ausführungsform umfasst der Kran zwei in Fahrtrichtung des Krans liegende erste Kranbeine und zwei entgegen der Fahrtrichtung des Krans liegende zweite Kranbeine, wobei an jedem der Kranbeine zumindest eine in Fahrtrichtung des Krans ausgerichtete Sensorvorrichtung montiert ist und zumindest eine entgegen der Fahrtrichtung des Krans ausgerichtete Sensorvorrichtung montiert ist.

Gemäß einer Ausführungsform kann der Industrieroboter, d.h. der Kran, die Fahrtrichtung wechseln und insbesondere wechselweise in eine Richtung oder in die entgegengesetzte Richtung fahren. Es versteht sich, dass eine an dem Industrieroboter montierte Sensorvorrichtung, die zunächst in Fahrtrichtung ausgerichtet ist, dann nach einem Richtungswechsel entgegen der Fahrtrichtung ausgerichtet ist und umgekehrt.

Es versteht sich, dass das bezüglich der erfindungsgemäßen Sensorvorrichtung Beschriebene auch für die Verwendung der Sensorvorrichtung und das System gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1A: eine schematische Darstellung der Frontansicht einer Sensorvorrichtung in einer ersten Sensoranordnung;
- Fig. 1B: eine schematische Darstellung einer Seitenansicht eines ersten Umgebungssensors in der ersten Sensoranordnung;
- Fig. 1C: eine schematische Darstellung einer Seitenansicht eines zweiten Umgebungssensors in der ersten Sensoranordnung;
- Fig. 2A: eine schematische Darstellung der Frontansicht eines Überlappungsbereichs der Sichtfelder der Umgebungssensoren in der ersten Sensoranordnung;
- Fig. 2B: eine schematische Darstellung einer Seitenansicht eines Überlappungsbereichs der Sichtfelder der Umgebungssensoren in der ersten Sensoranordnung;
- Fig. 3A: eine schematische Darstellung der Frontansicht einer Sensorvorrichtung in einer zweiten Sensoranordnung;
- Fig. 3B: eine schematische Darstellung einer Seitenansicht eines ersten Umgebungssensors in der zweiten Sensoranordnung;
- Fig. 3C: eine schematische Darstellung einer Seitenansicht eines zweiten Umgebungssensors in der zweiten Sensoranordnung;
- Fig. 4A: eine schematische Darstellung der Frontansicht eines Überlappungsbereichs der Sichtfelder der Umgebungssensoren in der zweiten Sensoranordnung;
- Fig. 4B: eine schematische Darstellung einer Seitenansicht eines Überlappungsbereichs der Sichtfelder der Umgebungssensoren in der zweiten Sensoranordnung;
- Fig. 5: eine schematische Darstellung der Frontansicht einer Sensorvorrichtung in einer zweiten Sensoranordnung;
- Fig. 6: eine schematische Darstellung einer Seitenansicht einer Sensorvorrichtung in einer zweiten Sensoranordnung;
- Fig. 7A: eine schematische Darstellung der Frontansicht einer Sensorvorrichtung in einer zweiten Sensoranordnung;
- Fig. 7B: eine schematische Darstellung einer Seitenansicht der Sensorvorrichtung in der zweiten Sensoranordnung;
- Fig. 8: eine schematische Darstellung der Frontansicht einer Sensorvorrichtung in einer ersten Sensoranordnung;
- Fig. 9: eine schematische Darstellung der Frontansicht einer Sensorvorrichtung in einer ersten Sensoranordnung;
- Fig. 10A: eine schematische Darstellung der Frontansicht einer Sensorvorrichtung in einer ersten Sensoranordnung;
- Fig. 10B: eine schematische Darstellung der Draufsicht der Sensorvorrichtung in der ersten Sensoranordnung;
- Fig. 11: eine schematische Darstellung einer Seitenansicht eines Systems; und
- Fig. 12: eine schematische Darstellung einer Draufsicht eines Systems;

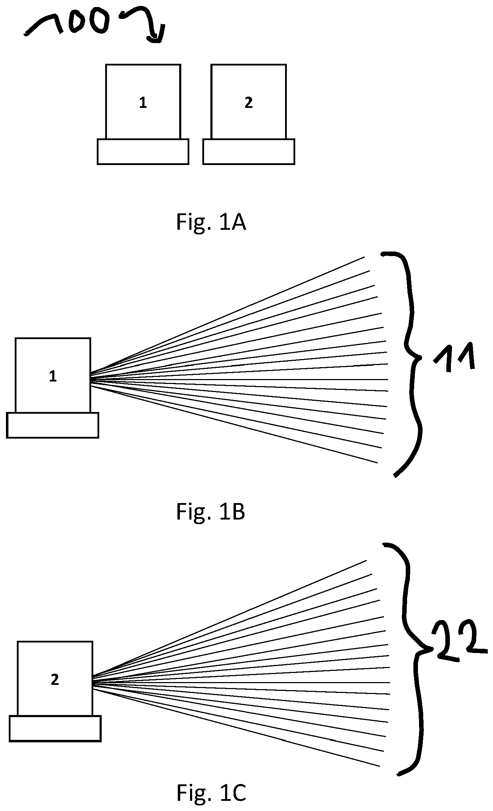

Fig. 1A zeigt eine schematische Darstellung der Frontansicht einer Sensorvorrichtung 100 in einer ersten Sensoranordnung. Die Sensorvorrichtung 100 zur Erfassung eines Fahrbereichs eines Industrieroboters (nicht in Fig. 1A gezeigt) umfasst zumindest einen ersten Umgebungssensor 1 und einen zweiten Umgebungssensor 2. Die Sensorvorrichtung 100 umfasst ferner eine Halterung (nicht in Fig. 1A gezeigt) für die Umgebungssensoren 1, 2, wobei die Halterung ausgebildet ist, die Umgebungssensoren 1, 2 in der ersten Sensoranordnung zu halten. **In** der in Fig. 1A gezeigten ersten Sensoranordnung sind die Umgebungssensoren nebeneinander angeordnet.

Fig. 1B und Fig. 1C zeigen eine schematische Darstellung einer Seitenansicht des ersten Umgebungssensors 1 beziehungsweise des zweiten Umgebungssensors 2 in einer ersten Sensoranordnung, wie sie beispielsweise in Fig. 1A dargestellt ist. Der erste Umgebungssensor 1 sendet für eine Umgebungserfassung in mehreren ersten Lagen 11 Sendelicht aus. Der zweite Umgebungssensor 2 sendet für eine Umgebungserfassung in mehreren zweiten Lagen 22 Sendelicht aus.

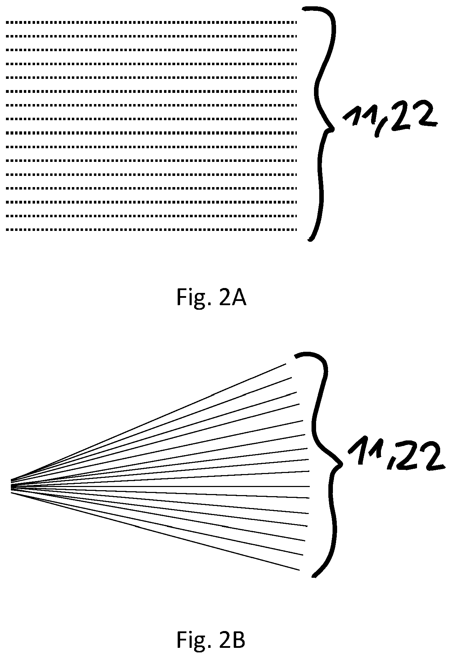

Fig. 2A und Fig. 2B zeigen eine schematische Darstellung der Frontansicht beziehungsweise einer Seitenansicht eines Überlappungsbereichs der Sichtfelder der Umgebungssensoren in einer ersten Sensoranordnung, wie sie z.B. in Fig. 1A gezeigt ist. **In** der ersten Sensoranordnung sind die Umgebungssensoren 1, 2 so angeordnet (und beispielsweise wie in Fig. 1A nebeneinander), dass die ersten Lagen 11 des Sendelichts des ersten Umgebungssensors 1 mit den zweiten Lagen 22 des Sendelichts des zweiten Umgebungssensors 2 in einem Überlappungsbereich der Sichtfelder der Umgebungssensoren 1, 2 zusammenfallen. In anderen Worten können die Umgebungssensoren 1, 2 zumindest einen Teil des Fahrbereichs redundant erfassen. Vorzugsweise sind, wie in Fig. 2A und 2B gezeigt, in dem Überlappungsbereich der Sichtfelder jede der ersten Lagen 11 mit jeweils einer der zweiten Lagen 22 deckungsgleich, sodass in dem Überlappungsbereich der Sichtfelder der Umgebungssensoren 1, 2 die Gesamtanzahl der (Scan-)Lagen, mit denen die Umgebung effektiv erfasst wird, der Anzahl der ersten Lagen 11 des Sendelichts des ersten Umgebungssensors 1 bzw. der Anzahl der zweiten Lagen 22 des Sendelichts des zweiten Umgebungssensors entspricht.

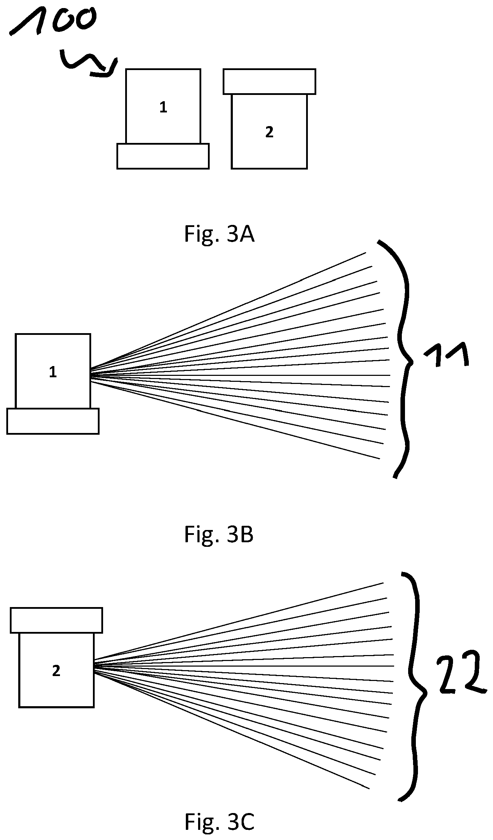

Fig. 3A zeigt eine schematische Darstellung der Frontansicht einer Sensorvorrichtung 100 in einer zweiten Sensoranordnung. Die in Fig. 3A gezeigte Sensorvorrichtung 100 umfasst ähnliche Komponenten wie die in Fig. 1A gezeigte Sensorvorrichtung, wobei die Halterung (nicht in Fig. 3A gezeigt) für die Umgebungssensoren 1, 2 jedoch ausgebildet ist, die Umgebungssensoren 1, 2 in einer von der ersten Sensoranordnung verschiedenen zweiten Sensoranordnung zu halten. In der in Fig. 3A gezeigten zweiten Sensoranordnung sind die Umgebungssensoren nebeneinander angeordnet, wobei der zweite Umgebungssensor 2 jedoch um 180° verdreht ist, sodass dieser im Vergleich zu dem ersten Umgebungssensor 1 "auf dem Kopf" steht.

Fig. 3B und Fig. 3C zeigen eine schematische Darstellung einer Seitenansicht des ersten Umgebungssensors 1 beziehungsweise des zweiten Umgebungssensors 2 in einer zweiten Sensoranordnung, wie sie beispielsweise in Fig. 3A dargestellt ist. Der erste Umgebungssensor 1 sendet für eine Umgebungserfassung in mehreren ersten Lagen 11 Sendelicht aus. Der zweite Umgebungssensor 2 sendet für eine Umgebungserfassung in mehreren zweiten Lagen 22 Sendelicht aus.

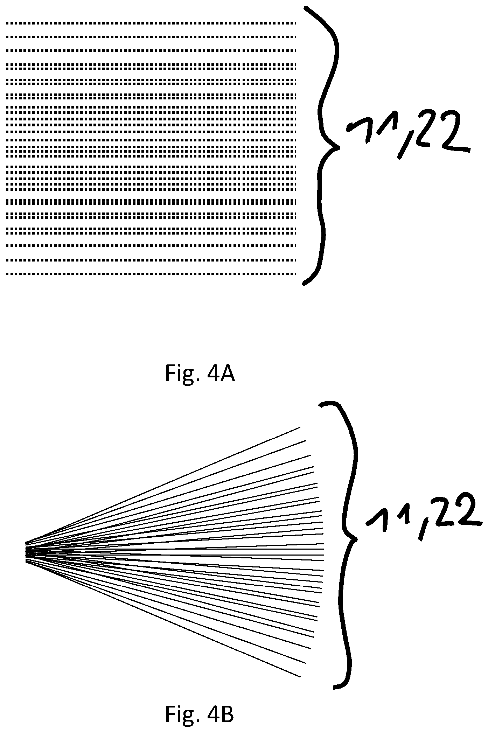

Fig. 4A und Fig. 4B zeigen eine schematische Darstellung der Frontansicht beziehungsweise einer Seitenansicht eines Überlappungsbereichs der Sichtfelder der Umgebungssensoren in einer zweiten Sensoranordnung, wie sie z.B. in Fig. 3A gezeigt ist. In der zweiten Sensoranordnung sind die Umgebungssensoren 1, 2 so angeordnet (und beispielsweise wie in Fig. 3A nebeneinander angeordnet, wobei einer der Umgebungssensoren auf dem Kopf steht), dass sich die ersten Lagen 11 des Sendelichts des ersten Umgebungssensors 1 mit den zweiten

Lagen 22 des Sendelichts des zweiten Umgebungssensors 2 in dem Überlappungsbereich der Sichtfelder der Umgebungssensoren 1, 2 abwechseln. In anderen Worten kann in dem Überlappungsbereich der Sichtfelder der Umgebungssensoren 1, 2, wie in Fig. 4A und Fig. 4B gezeigt, zumindest einen Teil eines Fahrbereichs eines Industrieroboters (nicht in Fig. 4A und 4B gezeigt) in einer Auflösung erfasst werden (es werden also mehr Bildbereiche mit insgesamt mehr Bildpunkten aufgenommen), die höher ist als die Auflösung der Umgebungssensoren 1, 2 jeweils für sich alleine genommen. Insbesondere kann in dem Überlappungsbereich der Sichtfelder der Umgebungssensoren 1, 2 die Gesamtanzahl der (Scan-)Lagen, mit denen die Umgebung effektiv erfasst wird, der Anzahl der ersten Lagen 11 des Sendelichts des ersten Umgebungssensors 1 addiert mit der Anzahl der zweiten Lagen 22 des Sendelichts des zweiten Umgebungssensors entsprechen. Auf diese Weise kann ein bestimmtes PL, beispielsweise PL r, erreicht werden, auch wenn die Umgebungssensoren 1, 2 jeweils für sich alleine genommen möglicherweise nicht als Sicherheitssensoren ausgebildet sind und/oder das gewünschte PL erreichen können.

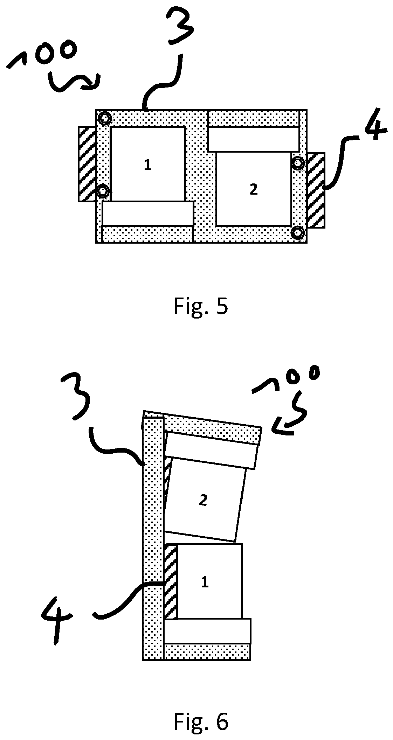

Fig. 5 zeigt eine schematische Darstellung der Frontansicht einer Sensorvorrichtung 100 in einer zweiten Sensoranordnung. Die in Fig. 5 gezeigte Sensorvorrichtung 100 umfasst die gleichen oder ähnlichen Komponenten wie die in Fig. 3A gezeigte Sensorvorrichtung. Die Halterung 3 in Fig. 5 ist dazu ausbildet, die Umgebungssensoren 1, 2 in einer zweiten Sensoranordnung zu halten, in der die Umgebungssensoren 1, 2 nebeneinander angeordnet sind, wobei der zweite Umgebungssensor 2 um 180° verdreht ist und daher im Vergleich zu dem ersten Umgebungssensor 1 "auf dem Kopf" steht.

Die Halterung 3 der Sensorvorrichtung 100 in Fig. 5 umfasst zumindest eine Markierung 4, wobei die Markierung 4 derart an der Halterung 3 angeordnet ist, dass die Markierung von dem ersten Umgebungssensor 1 und/oder von dem zweiten Umgebungssensor 2 für Diagnosezwecke erfasst werden kann. Die Sensorvorrichtung 100, wie z.B. in Fig. 5 gezeigt, kann ferner eine Verarbeitungsvorrichtung (nicht in Fig. 5 gezeigt) umfassen, die dazu ausgebildet ist, anhand von dem ersten Umgebungssensor 1 und/oder von dem zweiten Umgebungssensor 2 empfangenen Empfangslichts Sensordaten über die Umgebung, insbesondere über zumindest einen Teil des Fahrbereichs des Industrieroboters (nicht in Fig. 5 gezeigt), zu gewinnen, insbesondere mit einem Laufzeitverfahren zu messen.

Die Verarbeitungsvorrichtung (nicht in Fig. 5 gezeigt) kann dazu ausgebildet sein, anhand des von dem ersten Umgebungssensor 1 empfangenen Empfangslichts erste Sensordaten zu gewinnen und anhand des von dem zweiten Umgebungssensor 2 empfangenen Empfangslichts zweite Sensordaten zu gewinnen, anhand der ersten Sensordaten und der zweiten Sensordaten eine erste Position der Markierung 4 beziehungsweise eine zweite Position der Markierung 4 mittels Laufzeitverfahren und/oder optischer Verzerrung der Markierung 4 zu bestimmten und/oder anhand beider Sensordaten eine dritte Position der Markierung 4 mittels Lateration und/oder Triangulation zu bestimmen, und einen Fehlerzustand der Umgebungssensoren 1, 2 daran festzustellen, dass bei einem Abgleich der bestimmten ersten, zweiten und/oder dritten Position der Markierung 4 miteinander und/oder bei einem Abgleich der bestimmten ersten, zweiten und/oder dritten Position der Markierung 4 mit einer vorbestimmten Position der Markierung 4 eine Abweichung feststellbar ist, und/oder dass im Zeitverlauf eine Veränderung der ersten, zweiten und/oder dritten Position der Markierung 4 feststellbar ist. Die Verarbeitungsvorrichtung (nicht gezeigt) kann eine separate Verarbeitungsvorrichtung sein, die mit den Umgebungssensoren 1, 2 in kabelloser oder kabelgebundener Signalverbindung steht. Die erste und/oder zweite Position der Markierung 4 kann optional durch die separate Verarbeitungsvorrichtung anhand der jeweiligen Sensordaten berechnet werden oder kann auch bereits durch den jeweiligen Umgebungssensor 1, 2 selbst berechnet werden, so dass nur noch die berechnete Position an die Verarbeitungsvorrichtung übermittelt wird.

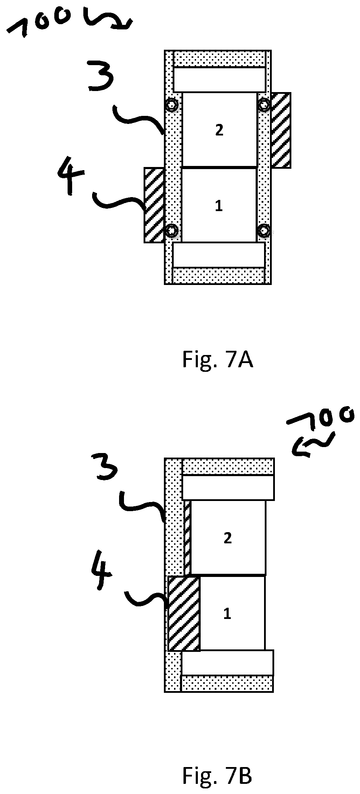

Fig. 6, Fig. 7A und Fig. 7B zeigen weitere Möglichkeiten, wie die Umgebungssensoren 1, 2 in einer zweiten Sensoranordnung angeordnet werden können. Wie in Fig. 6 und Fig. 7A gezeigt, kann der zweite Umgebungssensor 2 über und insbesondere auf dem ersten Umgebungssensor 1 angeordnet sein. Fig. 7B zeigt eine Seitenansicht der in Fig. 7A dargestellten Frontansicht einer zweiten Sensoranordnung. Der zweite Umgebungssensor 2 ist um 180° verdreht und steht insbesondere auf dem Kopf. Zusätzlich oder alternativ kann der zweite Umgebungssensor 2, wie in Fig. 6 gezeigt, verkippt sein und insbesondere nach unten geneigt sein.

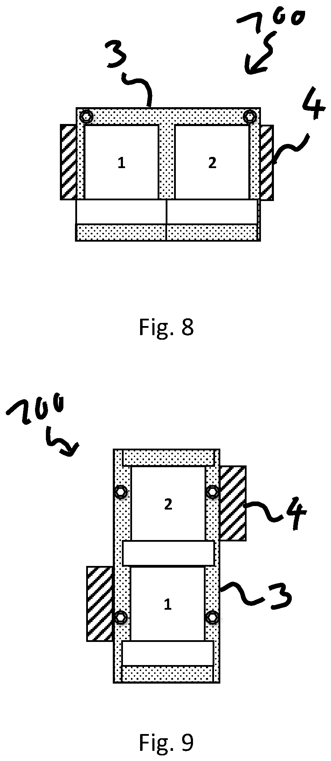

Fig. 8 zeigt eine schematische Darstellung der Frontansicht einer Sensorvorrichtung 100 in einer ersten Sensoranordnung. Die in Fig. 8 gezeigte Sensorvorrichtung 100 umfasst die gleichen oder ähnlichen Komponenten wie die in Fig. 1A gezeigte Sensorvorrichtung. Die Halterung 3 in Fig. 8 ist dazu ausbildet, die Umgebungssensoren 1, 2 in einer ersten Sensoranordnung zu halten, in der die Umgebungssensoren 1, 2 nebeneinander angeordnet sind. Wie in Fig. 8 und auch in Fig. 1A ersichtlich haben die Umgebungssensoren 1, 2 dabei die gleiche Orientierung zueinander. Ferner weist die Halterung 3, wie in Fig. 8 gezeigt, zumindest eine Markierung 4 auf, wobei die Markierung 4 derart an der Halterung 3 angeordnet ist, dass die Markierung von dem ersten Umgebungssensor 1 und/oder von dem zweiten Umgebungssensor 2 für Diagnosezwecke erfasst werden kann. Die Sensorvorrichtung 100 in Fig. 8 kann ferner eine Verarbeitungsvorrichtung (nicht in Fig. 8 gezeigt) umfassen. In Bezug auf die Markierung 4 und Verarbeitungsvorrichtung der Sensorvorrichtung 100 in Fig. 8 gilt das gleiche wie beschrieben für die Sensorvorrichtung 100 in Fig. 5.

Fig. 9 zeigt eine weitere Möglichkeit, wie die Umgebungssensoren 1, 2 in einer ersten Sensoranordnung angeordnet werden können. Der zweite Umgebungssensor 2 kann über und insbesondere auf dem ersten Umgebungssensor 1 angeordnet sein, wobei der erste und der zweite Umgebungssensor 1,2 die gleiche Orientierung zueinander haben. Im Vergleich zu den in Fig. 6, Fig. 7A und Fig. 7B gezeigten zweiten Sensoranordnungen ist der zweite Umgebungssensor 2 in dieser ersten Sensoranordnung daher nicht verdreht und/oder verkippt.

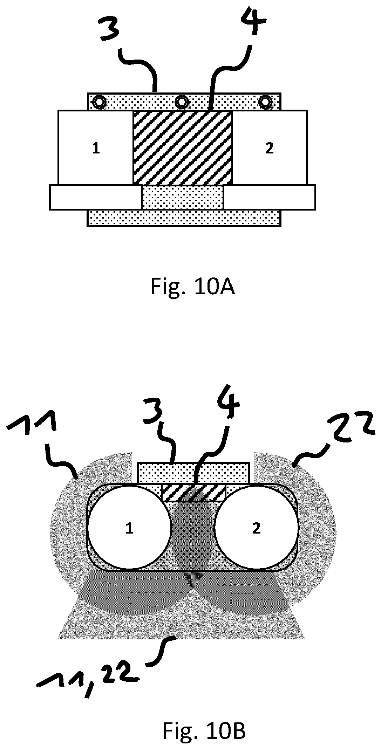

Fig. 10A und Fig. 10B zeigen eine schematische Darstellung der Frontansicht beziehungsweise der Draufsicht einer Sensorvorrichtung 100 in einer ersten Sensoranordnung. Der erste Umgebungssensor 1 und/oder der zweite Umgebungssensor 2 umfassen jeweils ein Sichtfeld von gleich oder mehr als 180°, bevorzugt gleich oder mehr als 225°, bevorzugt gleich oder mehr als 270°, bevorzugt gleich oder mehr als 315°, und bevorzugt gleich 360°. Die Halterung 3 kann in diesem Fall so ausgebildet sein, dass die Sichtfelder der Umgebungssensoren 1, 2 möglichst wenig behindert werden. Insbesondere können die Umgebungssensoren 1, 2 jeweils seitlich an einem Rand der Halterung 3 angebracht sein, wobei sich die Markierung 4 auf der Halterung 3 zischen den Umgebungssensoren 1, 2 befindet. Auf diese Weise können größere Seitenbereiche der Umgebung, und insbesondere auch Bereiche hinter der Halterung 3, mit den ersten Lagen 11 des Sendelichts des ersten Umgebungssensors 1 oder den zweiten Lagen 22 des Sendelichts des zweiten Umgebungssensors 2 (z.B. nicht redundant) erfasst werden, wobei in dem Überlappungsbereich der Sichtfelder die Umgebung mit den ersten Lagen 11 des ersten Umgebungssensors 1 und den zweiten Lagen 22 des zweiten Umgebungssensors 2 (z.B. redundant) erfasst wird.

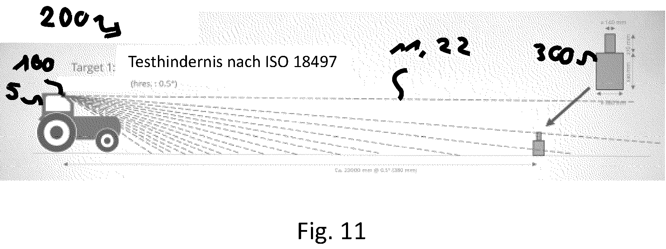

Fig. 11 zeigt eine schematische Darstellung einer Seitenansicht eines Systems 200 mit einer Sensorvorrichtung 100 in einer ersten Sensoranordnung, wie sie beispielsweise in Fig. 1A, Fig. 8, Fig. 9, Fig. 10A und Fig.10B gezeigt ist. Das System 200 zur Erfassung des Fahrbereichs eines Industrieroboters 5 umfasst den Industrieroboter 5 (hier in Fig. 11 dargestellt ein Traktor) und zumindest eine Sensorvorrichtung 100, wobei die Sensorvorrichtung 100 an dem Industrieroboter 5 montiert ist. Die ersten Lagen 11 und die zweiten Lagen 22 des Sendelichts der in der ersten Sensoranordnung angeordneten Umgebungssensoren 1, 2 der Sensorvorrichtung 100 können den Fahrbereich des Industrieroboters redundant erfassen, und insbesondere zumindest ein definiertes Testobjekt 300 in dem Fahrbereich des Industrieroboters redundant erfassen. Für den Agrarbereich kann das Testobjekt insbesondere ein Testhindernis 300 nach ISO 18497 (zylindrisch geformt, maximaler Radius von 380 mm, minimaler Radius von 1400 mm, maximale Höhe von 350 mmm plus 270 mm) sein, das in einer Entfernung von ca. 23000 mm mit zwei ersten Lagen 11 und zwei zweiten Lagen 22, die deckungsgleich sind, redundant erfasst werden kann, wodurch ein bestimmtes PL nach ISO 18497 und/oder eine bestimmte PC nach IEC 62998 erreicht werden kann, beispielsweise PL r nach ISO 13849 und PC r nach IEC 62998 bei Verwendung von Umgebungssensoren mit PL r-1 und PC r. Es versteht sich, dass je nach Anwendungsbereich ein anderes Testobjekt verwendet werden kann, welches also zum Beispiel eine andere Form aufweisen, niedriger oder höher sein und/oder ein größeres oder kleineres Volumen aufweisen kann.

Die Sensorvorrichtung 100 des Systems 200 kann eine Verarbeitungsvorrichtung (nicht in Fig. 11 gezeigt) umfassen, wobei die Verarbeitungsvorrichtung dazu ausgebildet sein kann, anhand von Sensordaten der Umgebungssensoren einen Gefahrenzustand festzustellen, und auf die Feststellung des Gefahrenzustands hin ein Signal auszugeben und/oder den Industrieroboter 5 in einen abgesicherten Steuerungsmodus zu versetzen.

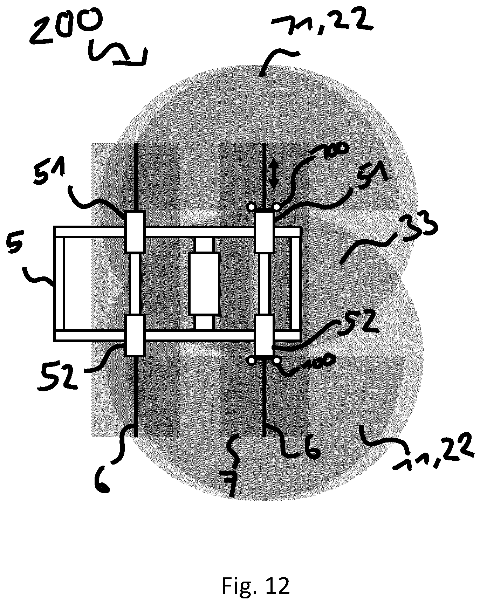

Fig. 12 zeigt eine schematische Darstellung einer Draufsicht eines Systems 200 zur Erfassung des Fahrbereichs 7 eines Industrieroboters 5, hier eines Krans zum Bewegen von Containern. Das System 200 umfasst den Kran 5, wobei der Kran ein schienengeführter (Portal-)Kran sein kann und sich daher auf Schienen 6 bewegen kann. Das System 200 in Fig. 12 umfasst zumindest zwei Sensorvorrichtungen 100, wie sie beispielsweise in Fig. 1A, Fig. 3A, und Fig. 5 bis Fig.10B gezeigt sind. Der Kran 5 umfasst zumindest ein in Fahrtrichtung des Krans liegendes erstes Kranbein 51 und zumindest ein entgegen der Fahrtrichtung des Krans liegendes zweites Kranbein 52, wobei an dem ersten Kranbein 51 und an dem zweiten Kranbein 52 jeweils zumindest eine Sensorvorrichtung 100 montiert ist, und insbesondere an einem Laufdrehgestell eines jeweiligen Kranbeins 51, 52 montiert ist. Die Sensorvorrichtungen 100 können an den Kranbeinen 51,52 beispielsweise in einer Höhe von ca. 5 m angebracht sein.

Der in Fig. 12 gezeigte Kran 5 umfasst zwei erste Kranbeine 51 und zwei zweite Kranbeine 52. Es versteht sich, dass der Kran 5 mehr oder auch weniger Kranbeine als wie in Fig. 12 gezeigt umfassen kann.

Die Sensorvorrichtung 100 an dem ersten Kranbein 51 des Krans 5 in Fig. 12 kann in Fahrtrichtung des Krans 5 ausgerichtet sein und die Sensorvorrichtung 100 an dem zweiten Kranbein 52 kann entgegen der Fahrtrichtung des Krans 5 ausgerichtet sein. Wie mit dem Pfeil angedeutet kann der Kran 5 auch die Fahrrichtung wechseln, und insbesondere wechselweise in eine Richtung oder in die entgegengesetzte Richtung fahren. Es versteht sich, dass die eine Sensorvorrichtung 100, die zunächst in Fahrtrichtung ausgerichtet ist, dann nach einem Richtungswechsel entgegen der Fahrtrichtung ausgerichtet ist und umgekehrt. An jedem der Kranbeine 51, 52 kann zumindest eine in Fahrtrichtung des Krans ausgerichtete Sensorvorrichtung 100 montiert sein und zumindest eine entgegen der Fahrtrichtung des Krans ausgerichtete Sensorvorrichtung 100 montiert sein.

Die Sensorvorrichtungen 100 können die gleiche Sensoranordnung oder eine unterschiedliche Sensoranordnung aufweisen. Beispielsweise können beide Sensorvorrichtungen 100 die erste Sensoranordnung oder die zweite Sensoranordnung der Umgebungssensoren aufweisen. Alternativ kann eine Sensorvorrichtung 100 die erste Sensoranordnung der Umgebungssensoren und die andere Sensorvorrichtung 100 die zweite Sensoranordnung der Umgebungssensoren aufweisen.

Ferner können die Sensorvorrichtungen 100 so an den Kranbeinen angebracht sein und so ausgebildet sein, dass die Umgebungssensoren beider Sensorvorrichtungen 100 auch jeweils einen Bereich 33 zwischen den Kranbeinen 51, 52 erfassen können. Dies ist insbesondere der Fall, wenn die ersten Umgebungssensoren und/oder die zweiten Umgebungssensoren der Sensorvorrichtungen 100 jeweils ein Sichtfeld von mehr als 180°, bevorzugt gleich oder mehr als 225°, bevorzugt gleich oder mehr als 270°, bevorzugt gleich oder mehr als 315°, und bevorzugt gleich 360° umfassen, wie z.B. in Fig. 10A und Fig. 10B dargestellt. Es versteht sich, dass die Halterungen 3 der Sensorvorrichtungen 100 in diesem Fall so ausgebildet sein können, dass die Sichtfelder der Umgebungssensoren möglichst wenig behindert werden. Die Umgebungssensoren beider Sensorvorrichtungen 100 können jeweils so (z.B. seitlich an den Rändern der jeweiligen Halterung und an oder überstehend von den Kanten des jeweiligen Kranbeins 51, 52) gehalten werden, dass die Umgebungssensoren auch den Bereich 33 zwischen den Kranbeinen 51, 52 erfassen können. Im Zusammenspiel der ersten Umgebungssensoren und der zweiten Umgebungssensoren beider Sensorvorrichtungen 100 kann der Bereich 33 zwischen den Kranbeinen 51, 52 redundant und/oder abwechselnd erfasst werden.

Die Sensorvorrichtungen 100 können auf diese Weise fast den gesamten oder den gesamten Fahrbereich 7 des Krans 5 (redundant und/oder abwechselnd) erfassen.

## Patentansprüche

1. Sensorvorrichtung (100) zur Erfassung des Fahrbereichs (7) eines Industrieroboters (5), insbesondere eines Krans zum Bewegen von Containern,
wobei die Sensorvorrichtung (100) zumindest einen ersten Umgebungssensor (1) und einen zweiten Umgebungssensor (2) umfasst, wobei der erste Umgebungssensor (1) für eine Umgebungserfassung in mehreren ersten Lagen (11), die als die Umgebung abtastende Scanlagen umgesetzt sind, Sendelicht aussendet, und
wobei der zweite Umgebungssensor (2) für eine Umgebungserfassung in mehreren zweiten Lagen (22), die ebenfalls als die Umgebung abtastende Scanlagen umgesetzt sind, Sendelicht aussendet,
**dadurch gekennzeichnet, dass**
der erste Umgebungssensor (1) und der zweite Umgebungssensor (2) jeweils einen Mehrstrahllaserscanner umfassen,
und eine Halterung (3) für die Umgebungssensoren (1, 2) vorhanden ist, wobei die Halterung (3) ausgebildet ist, die Umgebungssensoren (1, 2) zumindest zwischen einer ersten Sensoranordnung und einer von der ersten Sensoranordnung verschiedenen zweiten Sensoranordnung veränderbar zu halten, wobei in der ersten Sensoranordnung die ersten Lagen (11) des Sendelichts des ersten Umgebungssensors (1) mit den zweiten Lagen (22) des Sendelichts des zweiten Umgebungssensors (2) in dem Überlappungsbereich der Sichtfelder der Umgebungssensoren (1,2) zusammenfallen, wobei in dem Überlappungsbereich der Sichtfelder zumindest eine der ersten Lagen mit einer der zweiten Lagen vollständig überlappt, und in der zweiten Sensoranordnung sich die ersten Lagen (11) des Sendelichts des ersten Umgebungssensors (1) mit den zweiten Lagen (22) des Sendelichts des zweiten Umgebungssensors (2) in dem Überlappungsbereich der Sichtfelder der Umgebungssensoren (1, 2) abwechseln, wobei in dem Überlappungsbereich der Sichtfelder zumindest eine Lage der ersten Lagen zwischen zwei direkt, mit Ausnahme der einen Lage der ersten Lagen, nebeneinanderliegenden Lagen der zweiten Lagen angeordnet ist.

2. Sensorvorrichtung (100) nach Anspruch 1, wobei die Halterung (3) zumindest eine Markierung (4) umfasst, wobei die Markierung (4) derart an der Halterung (3) angeordnet ist, dass die Markierung (4) von dem ersten Umgebungssensor (1) und/oder von dem zweiten Umgebungssensor (2) für Diagnosezwecke erfasst werden kann.

3. Sensorvorrichtung (100) nach einem der voranstehenden Ansprüche, wobei die Sensorvorrichtung (100) ferner eine Verarbeitungsvorrichtung umfasst, die dazu ausgebildet ist, anhand von dem ersten Umgebungssensor (1) und/oder von dem zweiten Umgebungssensor (2) empfangenen Empfangslichts Sensordaten über die Umgebung, insbesondere über zumindest einen Teil des Fahrbereichs (7) des Industrieroboters (5), zu gewinnen, insbesondere mit einem Laufzeitverfahren zu messen.

4. Sensorvorrichtung (100) nach Anspruch 3, wobei die Verarbeitungsvorrichtung dazu ausgebildet ist, anhand der Sensordaten einen Gefahrenzustand festzustellen, und
auf die Feststellung des Gefahrenzustands hin ein Signal auszugeben und/oder den Industrieroboter (5) in einen abgesicherten Steuerungsmodus zu versetzen.

5. Sensorvorrichtung (100) nach Anspruch 2, und Anspruch 3 oder 4, wobei die Verarbeitungsvorrichtung dazu ausgebildet ist,
anhand des von dem ersten Umgebungssensor (1) empfangenen Empfangslichts erste Sensordaten zu gewinnen und anhand des von dem zweiten Umgebungssensor (2) empfangenen Empfangslichts zweite Sensordaten zu gewinnen,
anhand der ersten Sensordaten und der zweiten Sensordaten eine erste Position der Markierung (4) und eine zweite Position der Markierung (4) mittels Laufzeitverfahren und/oder optischer Verzerrung der Markierung (4) zu bestimmen und anhand beider Sensordaten eine dritte Position der Markierung (4) mittels Lateration und/oder Triangulation zu bestimmen, und einen Fehlerzustand der Umgebungssensoren (1, 2) daran festzustellen,
dass bei einem Abgleich der bestimmten ersten, zweiten und dritten Position der Markierung (4) miteinander und/oder bei einem Abgleich der bestimmten ersten, zweiten und dritten Position der Markierung (4) mit einer vorbestimmten Position der Markierung (4) eine Abweichung feststellbar ist, oder
dass im Zeitverlauf eine Veränderung der ersten, zweiten und dritten Position der Markierung (4) feststellbar ist.

6. Sensorvorrichtung (100) nach einem der voranstehenden Ansprüche, wobei die Umgebungssensoren (1, 2) nebeneinander oder übereinander angeordnet sind.

7. Sensorvorrichtung (100) nach einem der voranstehenden Ansprüche, wobei einer der Umgebungssensoren (1, 2) in Bezug zu dem anderen verkippt und/oder verdreht, insbesondere um 180° verdreht, angeordnet ist, sodass sich die ersten Lagen (11) des Sendelichts des ersten Umgebungssensors (1) mit den zweiten Lagen (22) des Sendelichts des zweiten Umgebungssensors (2) in dem Überlappungsbereich der Sichtfelder der Umgebungssensoren (1, 2) abwechseln.

8. Sensorvorrichtung (100) nach einem der voranstehenden Ansprüche, wobei der erste und/oder der zweite Umgebungssensor (1, 2) als Sicherheitssensor ausgebildet ist.

9. Sensorvorrichtung (100) nach einem der voranstehenden Ansprüche, wobei der erste und/oder der zweite Umgebungssensor (1, 2) jeweils ein Sichtfeld von gleich oder mehr als 180°, bevorzugt gleich oder mehr als 225°, bevorzugt gleich oder mehr als 270°, bevorzugt gleich oder mehr als 315°, und bevorzugt gleich 360° umfasst.

10. Verwendung einer Sensorvorrichtung (100) nach einem der voranstehenden Ansprüche zur Erfassung des Fahrbereichs (7) eines Industrieroboters (5), insbesondere eines Krans zum Bewegen von Containern.

11. System (200) zur Erfassung des Fahrbereichs (7) eines Industrieroboters (5), insbesondere eines Krans zum Bewegen von Containern, umfassend den Industrieroboter (5), und
zumindest eine Sensorvorrichtung (100) nach einem der Ansprüche 1 bis 9, wobei die Sensorvorrichtung (100) an dem Industrieroboter (5) montiert ist.

12. System nach Anspruch 11,
wobei der Industrieroboter (5) ein Kran ist,
wobei der Kran (5) zumindest ein in Fahrtrichtung des Krans liegendes erstes Kranbein (51) umfasst und zumindest ein entgegen der Fahrtrichtung des Krans liegendes zweites Kranbein (52) umfasst,
wobei an dem ersten und an dem zweiten Kranbein (51, 52) jeweils zumindest eine Sensorvorrichtung (100) montiert ist, und insbesondere an einem Laufdrehgestell eines jeweiligen Kranbeins (51, 52) montiert ist,
wobei vorzugsweise die Sensorvorrichtung (100) an dem ersten Kranbein (51) in Fahrtrichtung des Krans (5) ausgerichtet ist und die Sensorvorrichtung (100) an dem zweiten Kranbein (52) entgegen der Fahrtrichtung des Krans (5) ausgerichtet ist.

13. System nach Anspruch 11 oder 12, wobei die Sensorvorrichtungen (100) so ausgebildet sind, und wobei insbesondere die Umgebungssensoren (1, 2) beider Sensorvorrichtungen (100) so ausgebildet sind und so gehalten werden, dass die Umgebungssensoren (1, 2) der Sensorvorrichtungen (100) auch einen Bereich (33) zwischen den Kranbeinen (51, 52) erfassen können.

## Claims

1. A sensor apparatus (100) for detecting the travel region (7) of an industrial robot (5), in particular a crane for moving containers,
wherein the sensor apparatus (100) comprises at least one first environmental sensor (1) and one second environmental sensor (2),
wherein the first environmental sensor (1) emits transmission light in a plurality of first layers (11), which are implemented as scanning layers that scan the environment, for an environmental detection, and
wherein the second environmental sensor (2) emits transmission light in a plurality of second layers (22), which are likewise implemented as scanning layers that scan the environment, for an environmental detection, **characterized in that**
the first environmental sensor (1) and the second environmental sensor (2) each comprise a multi-beam laser scanner,
and a holder (3) for the environmental sensors (1, 2) is present, wherein the holder (3) is configured to variably hold the environmental sensors (1, 2) at least between a first sensor arrangement and a second sensor arrangement different from the first sensor arrangement, wherein, in the first sensor arrangement, the first layers (11) of the transmission light of the first environmental sensor (1) coincide with the second layers (22) of the transmission light of the second environmental sensor (2) in the overlap region of the fields of view of the environmental sensors (1,2), wherein, in the overlap region of the fields of view, at least one of the first layers completely overlaps with one of the second layers and, in the second sensor arrangement, the first layers (11) of the transmission light of the first environmental sensor (1) alternate with the second layers (22) of the transmission light of the second environmental sensor (2) in the overlap region of the fields of view of the environmental sensors (1, 2), wherein, in the overlap region of the fields of view, at least one layer of the first layers is arranged between two layers of the second layers that are directly disposed next to one another, with the exception of the one layer of the first layers.

2. A sensor apparatus (100) according to claim 1, wherein the holder (3) comprises at least one marking (4), wherein the marking (4) is arranged at the holder (3) such that the marking (4) can be detected by the first environmental sensor (1) and/or by the second environmental sensor (2) for diagnostic purposes.

3. A sensor apparatus (100) according to one of the preceding claims, wherein the sensor apparatus (100) further comprises a processing apparatus which is configured, based on reception light received by the first environmental sensor (1) and/or by the second environmental sensor (2), to obtain sensor data about the environment, in particular about at least one part of the travel region (7) of the industrial robot (5), in particular to measure said sensor data using a time-of-flight method.

4. A sensor apparatus (100) according to claim 3, wherein the processing apparatus is configured
to determine a hazardous state based on the sensor data, and,
in response to the determination of the hazardous state, to output a signal and/or to set the industrial robot (5) into a safeguarded control mode.

5. A sensor apparatus (100) according to claim 2, and claim 3 or 4, wherein the processing apparatus is configured
to obtain first sensor data based on the reception light received by the first environmental sensor (1) and to obtain second sensor data based on the reception light received by the second environmental sensor (2),
to determine a first position of the marking (4) and a second position of the marking (4) based on the first sensor data and the second sensor data by means of time-of-flight methods and/or an optical distortion of the marking (4) and to determine a third position of the marking (4) based on both sensor data by means of lateration and/or triangulation, and to determine an error state of the environmental sensors (1, 2),
in that a deviation can be determined on a comparison of the determined first, second and third position of the marking (4) with one another and/or on a comparison of the determined first, second and third position of the marking (4) with a predetermined position of the marking (4), or
in that a change in the first, second and third position of the marking (4) can be determined over time.

6. A sensor apparatus (100) according to any one of the preceding claims, wherein the environmental sensors (1, 2) are arranged next to one another or above one another.

7. A sensor apparatus (100) according to any one of the preceding claims, wherein one of the environmental sensors (1, 2) is arranged tilted and/or rotated, in particular rotated by 180°, with respect to the other so that the first layers (11) of the transmission light of the first environmental sensor (1) alternate with the second layers (22) of the transmission light of the second environmental sensor (2) in the overlap region of the fields of view of the environmental sensors (1, 2).

8. A sensor apparatus (100) according to any one of the preceding claims, wherein the first and/or the second environmental sensor (1, 2) is/are configured as a safety sensor.

9. A sensor apparatus (100) according to any one of the preceding claims, wherein the first and/or the second environmental sensor (1, 2) comprises/comprise a respective field of view of equal to or more than 180°, preferably equal to or more than 225°, preferably equal to or more than 270°, preferably equal to or more than 315°, and preferably equal to 360°.

10. Use of a sensor apparatus (100) according to any one of the preceding claims for detecting the travel region (7) of an industrial robot (5), in particular a crane for moving containers.

11. A system (200) for detecting the travel region (7) of an industrial robot (5), in particular a crane for moving containers, said system (200) comprising the industrial robot (5), and
at least one sensor apparatus (100) according to any one of the claims 1 to 9, wherein the sensor apparatus (100) is mounted at the industrial robot (5).

12. A system according to claim 11,
wherein the industrial robot (5) is a crane,
wherein the crane (5) comprises at least one first crane leg (51) disposed in the direction of travel of the crane and at least one second crane leg (52) disposed opposite to the direction of travel of the crane,
wherein at least one sensor apparatus (100) is mounted at the first and at the second crane leg (51, 52) in each case, and is in particular mounted at a trailer bogie of a respective crane leg (51, 52),
wherein preferably the sensor apparatus (100) at the first crane leg (51) is oriented in the direction of travel of the crane (5) and the sensor apparatus (100) at the second crane leg (52) is oriented opposite to the direction of travel of the crane (5).

13. A system according to claim 11 or 12, wherein the sensor apparatuses (100) are configured such that, and wherein in particular the environmental sensors (1, 2) of both sensor apparatuses (100) are configured and held such that, the environmental sensors (1, 2) of the sensor apparatuses (100) can also detect a region (33) between the crane legs (51, 52).

## Revendications

1. Dispositif de capteur (100) destiné à détecter la zone de déplacement (7) d'un robot industriel (5), en particulier d'une grue destinée à déplacer des conteneurs,
le dispositif de capteur (100) comprenant au moins un premier capteur d'environnement (1) et un deuxième capteur d'environnement (2), le premier capteur d'environnement (1) émettant de la lumière pour détecter l'environnement dans plusieurs premières couches (11), qui sont mises en œuvre sous forme de trajectoires de balayage de l'environnement, émet une lumière d'émission, et
le deuxième capteur d'environnement (2) étant conçu pour détecter l'environnement dans plusieurs deuxièmes couches (22), qui sont également mises en œuvre sous forme de trajectoires de balayage de l'environnement, émet une lumière d'émission,
**caractérisé en ce que**
le premier capteur d'environnement (1) et le deuxième capteur d'environnement (2) comprennent chacun un scanner laser à faisceaux multiples, et
qu'un support (3) pour les capteurs d'environnement (1, 2) est prévu, le support (3) étant conçu pour maintenir les capteurs d'environnement (1, 2) de manière variable, au moins entre une première configuration de capteurs et une deuxième configuration de capteurs différente de la première, la première configuration de capteurs permettant aux premières couches (11) de la lumière émise par le premier capteur d'environnement (1) de coïncider avec les deuxièmes couches (22) de la lumière émise par le deuxième capteur d'environnement (2) dans la zone de chevauchement des champs de vision des capteurs d'environnement (1, 2), au moins l'une des premières couches chevauchant entièrement l'une des deuxièmes couches dans la zone de chevauchement des champs de vision, et dans le deuxième agencement de capteurs, les premières couches (11) du faisceau lumineux émis par le premier capteur d'environnement (1) alternent avec les deuxièmes couches (22) du faisceau lumineux émis par le deuxième capteur d'environnement (2) dans la zone de chevauchement des champs de vision des capteurs d'environnement (1, 2), au moins une des premières couches étant disposée,
dans la zone de chevauchement des champs de vision, entre deux des deuxièmes couches directement adjacentes, à l'exception de ladite une des premières couches.

2. Dispositif de capteur (100) selon la revendication 1, dans lequel le support (3) comprend au moins un repère (4), ledit repère (4) étant disposé sur le support (3) de telle sorte que le repère (4) puisse être détecté par le premier capteur d'environnement (1) et/ou par le deuxième capteur d'environnement (2) à des fins de diagnostic.

3. Dispositif de capteur (100) selon l'une des revendications précédentes, dans lequel le dispositif de capteur (100) comprend en outre un dispositif de traitement conçu pour générer, à partir de la lumière reçue par le premier capteur d'environnement (1) et/ou du deuxième capteur d'environnement (2), des données de capteur sur l'environnement, en particulier sur au moins une partie de la zone de déplacement (7) du robot industriel (5), notamment à l'aide d'un procédé de mesure du temps de transit.

4. Dispositif de capteur (100) selon la revendication 3, dans lequel le dispositif de traitement est conçu pour détecter un état de danger à partir des données de capteur et, dès la détection de cet état de danger, pour émettre un signal et/ou pour faire passer le robot industriel (5) en mode de commande sécurisé.

5. Dispositif de capteur (100) selon la revendication 2, et la revendication 3 ou 4, dans lequel le dispositif de traitement est conçu pour acquérir des premières données de capteur à partir de la lumière reçue par le premier capteur d'environnement (1) et pour acquérir des deuxièmes données de capteur à partir de la lumière reçue par le deuxième capteur d'environnement (2), à déterminer,
à partir des premières données de capteur et des deuxièmes données de capteur, une première position du repère (4) et une deuxième position du repère (4) au moyen d'une méthode de temps de transit et/ou d'une distorsion optique du repère (4), et à déterminer, à partir des deux données de capteur, une troisième position du repère (4) au moyen d'une latération et/ou d'une triangulation, et à détecter un état d'erreur des capteurs d'environnement (1, 2) en constatant que,
lors d'une comparaison entre les première, deuxième et troisième positions déterminées du repère (4) et/ou lors d'une comparaison entre les première, deuxième et troisième positions déterminées du repère (4) et une position prédéterminée du repère (4), un écart est constatable, ou
qu'une variation des première, deuxième et troisième positions du repère (4) est constatable au fil du temps.

6. Dispositif de capteur (100) selon l'une des revendications précédentes, dans lequel les capteurs d'environnement (1, 2) sont disposés côte à côte ou les uns au-dessus des autres.

7. Dispositif de capteur (100) selon l'une des revendications précédentes, dans lequel l'un des capteurs d'environnement (1, 2) est disposé de manière inclinée et/ou pivotée par rapport à l'autre, en particulier pivoté de 180°, de sorte que les premières couches (11) de la lumière émise par le premier capteur d'environnement (1) alternent avec les deuxièmes couches (22) de la lumière émise par le deuxième capteur d'environnement (2) dans la zone de chevauchement des champs de vision des capteurs d'environnement (1, 2).

8. Dispositif de capteur (100) selon l'une des revendications précédentes, dans lequel le premier et/ou le deuxième capteur d'environnement (1, 2) est conçu comme un capteur de sécurité.

9. Dispositif de capteur (100) selon l'une des revendications précédentes, dans lequel le premier et/ou le deuxième capteur d'environnement (1, 2) comprend chacun un champ de vision égal ou supérieur à 180°, de préférence égal ou supérieur à 225°, de préférence égal ou supérieur à 270°, de préférence égal ou supérieur à 315°, et de préférence égal à 360°.

10. Utilisation d'un dispositif de capteur (100) selon l'une des revendications précédentes pour détecter la zone de déplacement (7) d'un robot industriel (5), en particulier d'une grue destinée à déplacer des conteneurs.

11. Système (200) destiné à détecter la zone de déplacement (7) d'un robot industriel (5), en particulier d'une grue destinée à déplacer des conteneurs, comprenant le robot industriel (5) et
au moins un dispositif de capteur (100) selon l'une des revendications 1 à 9, le dispositif de capteur (100) étant monté sur le robot industriel (5).

12. Système selon la revendication 11,
dans lequel le robot industriel (5) est une grue,
ladite grue (5) comprenant au moins un premier pied de grue (51) situé dans le sens de déplacement de la grue et au moins un deuxième pied de grue (52) situé à l'opposé du sens de déplacement de la grue, au moins un dispositif de capteur (100) étant monté respectivement sur le premier et le deuxième pied de grue (51, 52), et notamment sur un bogie de roulement d'un pied de grue respectif (51, 52),
le dispositif de capteur (100) monté sur le premier pied de grue (51) étant de préférence orienté dans le sens de déplacement de la grue (5) et le dispositif de capteur (100) monté sur le deuxième pied de grue (52) étant orienté dans le sens opposé au sens de déplacement de la grue (5).

13. Système selon la revendication 11 ou 12, dans lequel les dispositifs de capteur (100) sont conçus de telle sorte, et en particulier les capteurs d'environnement (1, 2) des deux dispositifs de capteur (100) sont conçus et maintenus de telle sorte que les capteurs d'environnement (1, 2) des dispositifs de capteur (100) puissent également détecter une zone (33) située entre les pieds de la grue (51, 52).
